# EUROPÄISCHE PATENTANMELDUNG

(11) **EP 3 252 552 A1**
(43) Veröffentlichungstag der Anmeldung: **06.12.2017**
(21) Anmeldenummer: 16172688.0
(22) Anmeldetag: 02.06.2016
(51) Int. Cl.: G05B 19/4067, G05B 19/4061

(54) **AUTOMATISCHES FREIFAHREN EINES WERKZEUGS NACH EINER BETRIEBSUNTERBRECHUNG**

(71) Anmelder: Siemens Aktiengesellschaft, 80333 München (DE)
(72) Erfinder: Rosenbaum, Björn, 91056 Erlangen (DE)

(57) **Zusammenfassung**

Zum automatischen Freifahren eines Werkzeugs (56) in einer Maschine (30) nach einer unvorhergesehenen Betriebsunterbrechung werden die Anweisung, bei deren Ausführung sich die unvorhergesehene Betriebsunterbrechung ereignete, und die zugehörige räumliche Lage des Werkzeugs (56) abgespeichert und an eine Bearbeitungssimulation (14) übermittelt. Die Bearbeitungssimulation (14) berechnet unter Verwendung der Anweisung, bei deren Ausführung sich die unvorhergesehene Betriebsunterbrechung ereignete, der räumlichen Lage (62) des Werkzeugs (56) bei der unvorhergesehenen Betriebsunterbrechung, und Modellen der Maschine (30), des Spannmittels (58), des Werkzeugs (56) und der Rohform (40) des zu bearbeitenden Werkstücks (52) eine aktuelle Werkstückgeometrie zum Zeitpunkt der Betriebsunterbrechung. Sodann berechnet sie einen kollisionsfreien Werkzeugweg (64) von der Position (62) des Werkzeugs (56 bei der unvorhergesehenen Betriebsunterbrechung zu einer sicheren Zielposition (24). Der Werkzeugweg (64) wird in Form eines Freifahr-Steuerprogramms (48) an die Steuerung (32) der Maschine (30) übertragen und von der Steuerung (32) abgearbeitet.

## Beschreibung

Die Erfindung betrifft ein Verfahren zum automatischen Freifahren eines Werkzeugs in einer Maschine nach einer unvorhergesehenen Betriebsunterbrechung, wobei die Maschine ein Spannmittel für ein zu bearbeitendes Werkstück und ein Werkzeug zum Bearbeiten des Werkstücks umfasst.

Die Erfindung betrifft ebenfalls eine numerische Steuerung zum automatischen Freifahren eines Werkzeugs in einer Maschine nach einer unvorhergesehenen Betriebsunterbrechung, wobei die Maschine ein Spannmittel für ein zu bearbeitendes Werkstück und ein Werkzeug zum Bearbeiten des Werkstücks umfasst.

Die Erfindung betrifft weiterhin eine Werkzeugmaschine mit einer numerischen Steuerung zum automatischen Freifahren eines Werkzeugs in der Werkzeugmaschine nach einer unvorhergesehenen Betriebsunterbrechung, wobei die Maschine ein Spannmittel für ein zu bearbeitendes Werkstück und ein Werkzeug zum Bearbeiten des Werkstücks umfasst.

Ungeplante Unterbrechungen bei der Bearbeitung eines Werkstücks mit einer Werkzeugmaschine erfordern ein Eingreifen des Maschinenführers zum Wiederanlauf der Steuerung und der Werkzeugmaschine. Eine ungeplante Unterbrechung kann beispielsweise durch einen Stromausfall verursacht werden. Problematisch ist es, wenn bei der Unterbrechung das Bearbeitungswerkzeug im Eingriff mit dem zu bearbeitenden Werkstück steht. Dann muss das Werkzeug beispielsweise vom Maschinenführer manuell durch Verfahren der einzelnen Maschinenachsen von der Unterbrechungsstelle zu einer sicheren Position gefahren werden. In besonderen Fällen muss das Werkzeug, um Folgeschäden zu vermeiden, auf der gleichen Bahn zurück gezogen werden, auf der es bei der Bearbeitung des Werkstücks bis zur Unterbrechung verfahren wurde.

Abhängig von der Art der Werkzeugmaschine müssen gegebenenfalls auch das Werkzeug und/oder das Werkstück gelöst und die Maschine zurückgerüstet werden. Nach dem Freifahren muss die Maschine mit dem Werkzeug und Werkstück erneut gerüstet werden. Dabei ist das Risiko hoch, das Werkstück, das Werkzeug, das Spannmittel oder die Maschine zu beschädigen.

Ist die genaue Position und Orientierung des Werkzeugs bei der Unterbrechung nicht einsehbar, kann der Wiederanlauf der Steuerung und der Werkzeugmaschine auch zu einer irreparablen Beschädigung des Werkstücks führen. Dies stellt insbesondere bei einer länger andauernden und kostenintensiven Bearbeitung einen großen zusätzlichen Schaden dar. Die Schäden können zur völligen Unbrauchbarkeit von Werkzeug und/oder Werkstück führen. Derartige Schäden sind oft mit erheblichen Kosten durch Maschinenstillstand oder Bearbeitung eines neuen Werkstücks verbunden.

Der Erfindung liegt die Aufgabe zugrunde, ein Verfahren zum automatischen Freifahren eines Werkzeugs in einer Maschine nach einer unvorhergesehenen Betriebsunterbrechung anzugeben.

Der Erfindung liegt ebenfalls die Aufgabe zugrunde, eine numerische Steuerung zum automatischen Freifahren eines Werkzeugs in einer Maschine nach einer unvorhergesehenen Betriebsunterbrechung anzugeben.

Der Erfindung liegt schließlich die Aufgabe zugrunde, eine Werkzeugmaschine mit einer numerischen Steuerung zum automatischen Freifahren eines Werkzeugs in der Werkzeugmaschine nach einer unvorhergesehenen Betriebsunterbrechung anzugeben.

Die erstgenannte Aufgabe wird durch ein Verfahren mit den Merkmalen des Anspruchs 1 gelöst. Danach umfasst das eingangs genannte Verfahren die Schritte:
- automatisches Abspeichern der Anweisung, bei deren Ausführung sich die unvorhergesehene Betriebsunterbrechung ereignete,
- automatisches Abspeichern der räumlichen Lage des Werkzeugs bei der unvorhergesehenen Betriebsunterbrechung,
- Übermitteln der Anweisung und der räumlichen Lage an eine Bearbeitungssimulation,
- mittels der Bearbeitungssimulation Berechnen einer aktuellen Werkstückgeometrie zum Zeitpunkt der Betriebsunterbrechung unter Verwendung
   -- der Anweisung, bei deren Ausführung sich die unvorhergesehene Betriebsunterbrechung ereignete,
   -- der räumlichen Lage des Werkzeugs bei der unvorhergesehenen Betriebsunterbrechung,
   -- eines Modells der Maschine,
   -- eines Modells des Spannmittels,
   -- eines Modells des Werkzeugs und
   -- eines Modells der Rohform des zu bearbeitenden Werkstücks,
- Berechnung eines kollisionsfreien Werkzeugwegs von der Position des Werkzeugs bei der unvorhergesehenen Betriebsunterbrechung zu einer sicheren Zielposition unter Verwendung der aktuellen Werkstückgeometrie, der räumlichen Lage des Werkzeugs bei der unvorhergesehenen Betriebsunterbrechung und der Modelle der Maschine, des Spannmittels und des Werkzeugs,
- Übertragen des Werkzeugwegs in Form eines Freifahr-Steuerprogramms an die Steuerung der Maschine und
- Abarbeiten des Freifahr-Steuerprogramms.

Das Werkzeug wird somit nach einer unvorhergesehenen Unterbrechung einer Werkstückbearbeitung nach Wiederanlauf der Steuerung und der Maschine automatisch ohne Kollision mit dem Werkstück zu einer sicheren Zielposition gefahren. Dadurch werden Schäden an Werkzeug und Maschine und/oder Schäden am Werkstück und somit erhebliche zusätzliche Produktionskosten vermieden.

Vorteilhafte Ausgestaltungen des Verfahrens sind durch die Ansprüche 2 bis 5 gegeben.

Die zweitgenannte Aufgabe wird durch eine numerische Steuerung mit den Merkmalen des Anspruchs 6 gelöst. Danach umfasst die eingangs genannte numerische Steuerung
- Mittel zum automatischen Abspeichern der Anweisung, bei deren Ausführung sich die unvorhergesehene Betriebsunterbrechung ereignete,
- Mittel zum automatisches Abspeichern der räumlichen Lage des Werkzeugs bei der unvorhergesehenen Betriebsunterbrechung,
- Mittel zum Übermitteln der Anweisung und der räumlichen Lage an eine Bearbeitungssimulation, wobei die Bearbeitungssimulation Mittel umfasst zum Berechnen einer aktuellen Werkstückgeometrie zum Zeitpunkt der Betriebsunterbrechung unter Verwendung
   -- der Anweisung, bei deren Ausführung sich die unvorhergesehene Betriebsunterbrechung ereignete,
   -- der räumlichen Lage des Werkzeugs bei der unvorhergesehenen Betriebsunterbrechung,
   -- eines Modells der Maschine,
   -- eines Modells des Spannmittels,
   -- eines Modells des Werkzeugs und
   -- eines Modells der Rohform des zu bearbeitenden Werkstücks
- Mittel zum Berechnen eines kollisionsfreien Werkzeugwegs von der Position des Werkzeugs bei der unvorhergesehenen Betriebsunterbrechung zu einer sicheren Zielposition unter Verwendung der aktuellen Werkstückgeometrie, der räumlichen Lage des Werkzeugs bei der unvorhergesehenen Betriebsunterbrechung und der Modelle der Maschine, des Spannmittels und des Werkzeugs,
- Mittel zum Übertragen des Werkzeugwegs in Form eines Freifahr-Steuerprogramms an die Steuerung der Maschine und
- Mittel zum Abarbeiten des Freifahr-Steuerprogramms.

Die drittgenannte Aufgabe wird durch eine Werkzeugmaschine mit den Merkmalen des Anspruchs 7 gelöst. Danach umfasst die eingangs genannte Werkzeugmaschine die vorstehend angegebene numerische Steuerung.

Die vorstehend beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die in Verbindung mit der Zeichnung näher erläutert werden. Hierbei zeigen in schematischer Darstellung:
- FIG 1: in einem Ablaufdiagramm die wesentlichen Schritte eines Verfahrens zum automatischen Freifahren eines Werkzeugs in einer Maschine,
- FIG 2: in einem Übersichtsbild die wesentlichen Komponenten einer numerischen Steuerung zum automatischen Freifahren eines Werkzeugs in einer Maschine und
- FIG 3: ein Beispiel eines kollisionsfreien Freifahrwegs.

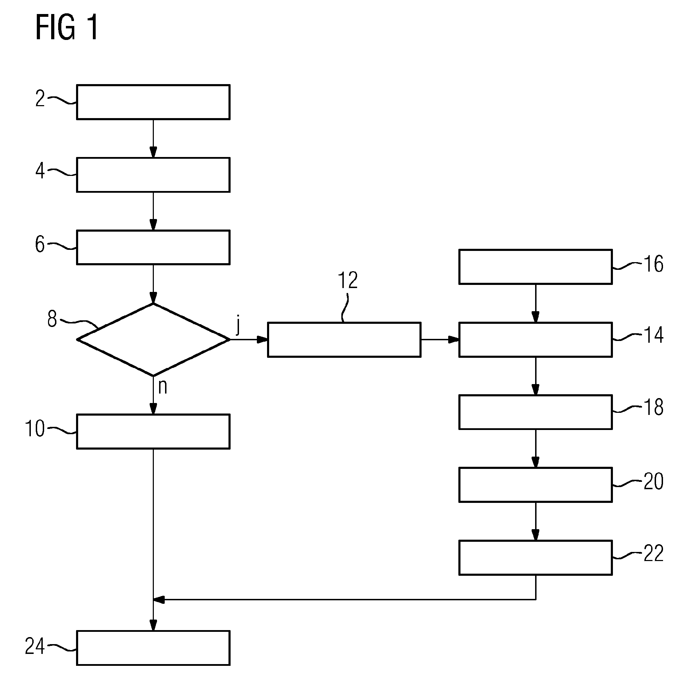

FIG 1 zeigt in einem Ablaufdiagramm die wesentlichen Verfahrensschritte eines Ausführungsbeispiels zum automatischen Freifahren eines Werkzeugs in einer Werkzeugmaschine. Das Verfahren kann nach einer unvorhergesehenen Betriebsunterbrechung der Werkzeugmaschine gestartet werden. Mögliche Ursachen einer unvorhergesehenen Betriebsunterbrechung sind beispielsweise ein Stromausfall oder eine Betätigung des Notausschalters. Besonders kritisch ist ein derartiger Betriebszustand, wenn das Werkzeug mit dem Werkstück in Bearbeitungskontakt steht.

Ein erster Verfahrensschritt 2 soll den Start des Verfahrens zum automatischen Freifahren nach einer unvorhergesehenen Unterbrechung angeben. In einem zweiten Verfahrensschritt 4 wird die Anweisung, bei deren Ausführung sich die unvorhergesehene Betriebsunterbrechung ereignete, gespeichert. Diese Anweisung wird im Folgenden auch als letzte Hauptsatzinformation bezeichnet. Die letzte Hauptsatzinformation umfasst beispielsweise Informationen dazu, welches Werkzeug zum Unterbrechungszeitpunkt in Benutzung war und welche Achsen der Werkzeugmaschine zur Zeit der Unterbrechung aktiviert waren. Zusätzlich wird die räumliche Lage des Werkzeugs abgespeichert. Die räumliche Lage des Werkzeugs umfasst die Ortskoordinaten eines Bezugspunkts auf dem Werkzeug sowie die räumliche Orientierung des Werkzeugs in der Maschine. Die Orientierung wird beispielsweise durch die Orientierung einer definierten Bezugsachse des Werkzeugs angegeben.

Nach Beseitigung der Ursache der unvorhergesehenen Betriebsunterbrechung wird die Maschine einschließlich ihrer Steuerung in einem dritten Verfahrensschritt 6 von einem Maschinenführer wieder eingeschaltet. Der Maschinenführer entscheidet dann in einem vierten Verfahrensschritt 8, ob das Werkzeug in einem fünften Verfahrensschritt 10 manuell ohne Kollisions- oder Beschädigungsrisiko freigefahren werden oder ob ein automatisches Freifahren durchgeführt werden soll. Ein automatisches Freifahren kommt insbesondere dann in Betracht, wenn die Lage und/oder Orientierung des Werkzeugs beispielsweise durch Maschinenteile oder das Werkstück selbst verdeckt ist.

Als Folge der Freigabe des automatischen Freifahrens durch den Maschinenführer wird in einem sechsten Verfahrensschritt 12 automatisch die Position und Orientierung des Werkzeugs beim Eintritt der unvorhergesehenen Betriebsunterbrechung sowie die letzte Hauptsatzinformation an eine Bearbeitungssimulation 14 übermittelt.

Die Bearbeitungssimulation 14 berechnet zunächst die Lage und die Orientierung sowie die Geometrie des Werkstücks zum Zeitpunkt der unvorhergesehenen Betriebsunterbrechung. Es wird sozusagen ein digitaler Zwilling des Werkstücks im aktuellen Bearbeitungszustand erzeugt.

Zur Berechnung eines optimalen Freifahrwegs verwendet die Bearbeitungssimulation 14 ein Modell 16 der konkreten Maschine mit 3D-Geometrieinformationen und 3D-Kinematikinformationen. Dieses Modell 16 bildet die konkrete Maschine virtuell nach. Es wird auch als digitaler Zwilling der Maschine 16 bezeichnet. Zusätzlich benötigt die Bearbeitungssimulation 14 ein Modell des aktuellen Werkzeugs, dass bei Eintritt der Betriebsunterbrechung im Eingriff mit dem Werkstück war sowie ein Modell des verwendeten Spannmittels.

Auf Basis des digitalen Zwillings der Maschine 16 und der Modelle des Werkzeugs und des Spannmittels wird eine virtuelle Bearbeitung eines Modells des Werkstück-Rohlings bis zum Eintritt der Unterbrechung simuliert. Auf diese Art und Weise wird ein digitaler Zwilling des Werkstücks erstellt, wie es zum Zeitpunkt der Betriebsunterbrechung vorliegt. Die Funktion der Bearbeitungssimulation 14 ist ähnlich der in CAM-Systemen (CAM = computer-aided manufacturing) verwendeten Simulation einer Bearbeitung.

In einem nachfolgenden siebten Verfahrensschritt 18 wird ein optimaler kollisionsfreier Werkzeugweg von der Position des Werkzeugs bei der unvorhergesehenen Betriebsunterbrechung zu einer sicheren Zielposition berechnet. Dabei sind vom Werkstück eingenommene und von der Maschine oder von Maschinenkomponenten belegte Raumbereiche für eine Durchquerung gesperrt. Diese gesperrten Raumbereiche werden aus den digitalen Modellen bestimmt. Von allen möglichen Werkzeugwegen wird beispielsweise ein möglichst kurzer Weg oder ein Weg, bei dem möglichst wenig Maschinenachsen aktiv sein müssen, als optimaler Weg bestimmt. Alternativ kann auch ein Weg ermittelt werden, für den eine möglichst geringe Zeit benötigt wird.

Dieser optimale Werkzeugweg wird in einem nachfolgenden achten Verfahrensschritt 20 in Form eines Steuerprogramms, beispielsweise in Form eines NC-Programms, umgesetzt und an die Werkzeugmaschine gegeben.

Nach einer Bestätigung durch einen Maschinenbediener wird das Programm in einem neunten Verfahrensschritt 22 in die Werkzeugmaschine geladen und von dieser zum sicheren und kollisionsfreien Freifahren des Werkzeugs abgearbeitet. Das Werkzeug befindet sich nach dem Freifahren in einer sicheren Zielposition 24. Die Werkzeugmaschine kann dann wie bei einer gewollten Unterbrechung der Bearbeitung wieder gestartet werden, wobei die Bearbeitung vom Unterbrechungsort an fortgesetzt wird.

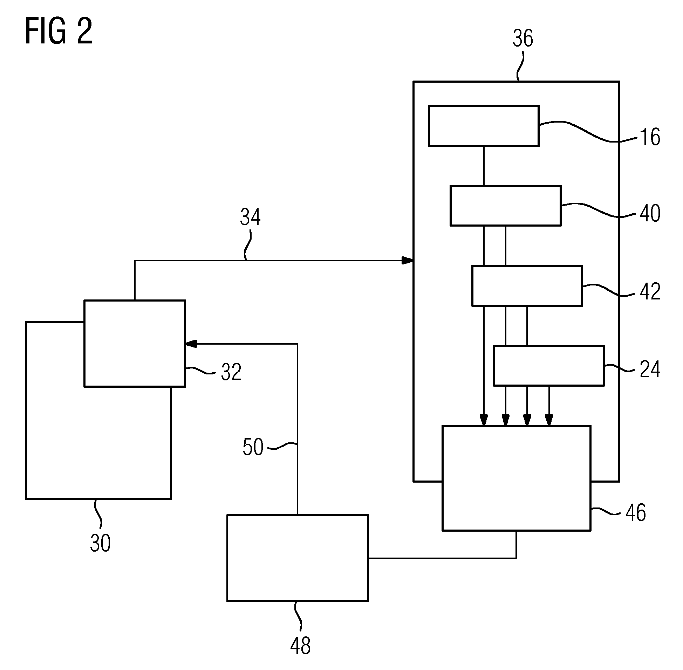

FIG 2 zeigt in einem Übersichtsbild eine numerische Steuerung zum automatischen Freifahren entsprechend dem anhand von FIG 1 beschriebenen Verfahren. Eine Werkzeugmaschine 30 ist mit einer numerischen Steuerung 32 in Wirkverbindung, wobei die numerische Steuerung 32 zusätzliche Funktionen zum automatischen Freifahren umfasst, wie dies vorstehend anhand von FIG 1 beschrieben wurde. In der Steuerung 32 ist ein Speicherbereich reserviert, um bei einer ungewollten Unterbrechung sowohl den aktuellen Anweisungssatz sowie die aktuelle räumliche Lage des Werkzeugs und Werkstücks speichern zu können. Zusätzlich werden gegebenenfalls noch Zustandsinformationen anderer aktiver Achsen zum Zeitpunkt der ungewollten Unterbrechung gespeichert. Diese Daten werden über eine Datenverbindung 34, beispielsweise ein Daten-Bussystem, an ein Berechnungsmodul 36 übertragen. Dem Berechnungsmodul 36 werden ebenfalls das 3D-Maschinenmodell 16 einschließlich Kinematikinformation sowie Informationen zum aktuellen Werkzeug und Spannmittel, die Rohteilgeometrie 40, die Werkzeugwege 42 sowie die sichere Zielposition 24 für das Freifahren zugeführt.

Mit Hilfe der vorstehend aufgeführten Modelle wird in dem Berechnungsmodul 36 auf der Basis der letzten Hauptsatzinformation die Werkstückgeometrie zur Zeit der Unterbrechung berechnet.

Ein Freifahr-Modul 46 zur Berechnung des Freifahrwegs berechnet, wie bereits in Verbindung mit FIG 1 beschrieben wurde, den optimalen und sicheren Freifahrweg.

Der Freifahrweg wird in einem NC-Modul 48 in ein Steuerprogramm für die Werkzeugmaschine 30 umgesetzt und über eine Datenleitung 50 an die Steuerung 32 zurück gegeben.

Das Berechnungsmodul 36, das Freifahr-Modul 46, das NC-Modul 48 können integrale Bestandteile der Steuerung 32 sein. Sie können aber räumlich getrennt von der Werkzeugmaschine 30 in einem CAM-System implementiert sein, wobei das CAM-System datenmäßig mit der Werkzeugmaschine 30 verbunden ist.

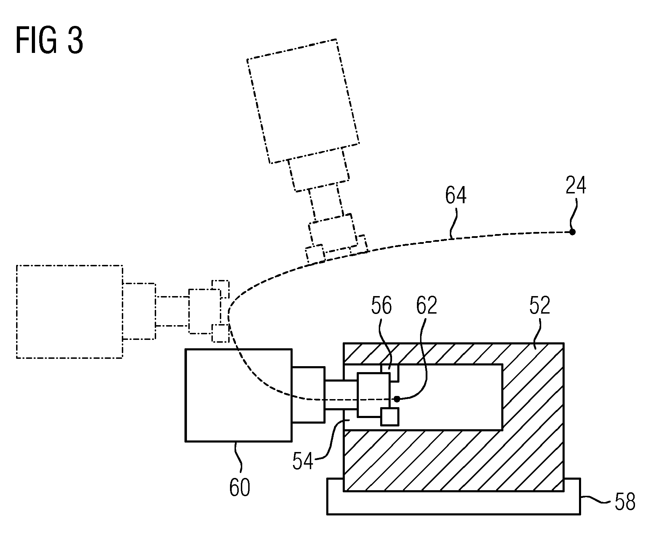

FIG 3 zeigt in einer Schnittdarstellung ein in Bearbeitung befindliches Werkstück 52 mit einem Sackloch 54, worin ein Fräser 56 eine Oberflächenbearbeitung durchführt. Das Werkstück 52 ist über ein Spannmittel 58 in der Maschine 30 (hier nicht dargestellt) befestigt. Der Fräser 56 ist an einem Spindelkopf 60 der Werkzeugmaschine befestigt.

Während der Bearbeitung erfolgt eine ungewollte Unterbrechung genau zu dem Zeitpunkt, zu dem sich der Fräser 56 am Unterbrechungspunkt 62 befindet. Dabei ist der Unterbrechungspunkt 62 ebenso wie die sichere Zielposition 24 der Ort, an dem sich ein am Werkzeug definierter Punkt jeweils befindet. Entlang eines optimalen Freifahrwegs 64, der entsprechend nach dem schon vorstehend anhand von FIG 1 beschriebenen Verfahren ermittelt wurde, wird das Werkzeug 56 mit dem Spindelkopf 60 kollisionsfrei in die sichere Zielposition 24 geführt.

## Patentansprüche

1. Verfahren zum automatischen Freifahren eines Werkzeugs (56) in einer Maschine (30) nach einer unvorhergesehenen Betriebsunterbrechung, wobei die Maschine (30) ein Spannmittel (58) für ein zu bearbeitendes Werkstück (52) und ein Werkzeug (56) zum Bearbeiten des Werkstücks (52) umfasst, mit den folgenden Verfahrensschritten:
- automatischen Abspeichern (4) der Anweisung, bei deren Ausführung sich die unvorhergesehene Betriebsunterbrechung ereignete,
- automatisches Abspeichern (4) der räumlichen Lage des Werkzeugs (56) bei der unvorhergesehenen Betriebsunterbrechung,
- Übermitteln (12) der Anweisung und der räumlichen Lage an eine Bearbeitungssimulation (14),
- mit der Bearbeitungssimulation (14) Berechnen einer aktuellen Werkstückgeometrie zum Zeitpunkt der Betriebsunterbrechung unter Verwendung
-- der Anweisung, bei deren Ausführung sich die unvorhergesehene Betriebsunterbrechung ereignete,
-- der räumlichen Lage (62) des Werkzeugs (56) bei der unvorhergesehenen Betriebsunterbrechung,
-- eines Modells (16) der Maschine (30),
-- eines Modells des Spannmittels (58),
-- eines Modells des Werkzeugs (56) und
-- eines Modells der Rohform (40) des zu bearbeitenden Werkstücks (52),
- Berechnung eines kollisionsfreien Werkzeugwegs (64) von der Position (62) des Werkzeugs (56) bei der unvorhergesehenen Betriebsunterbrechung zu einer sicheren Zielposition (24) unter Verwendung der aktuellen Werkstückgeometrie, der räumlichen Lage des Werkzeugs (56) bei der unvorhergesehenen Betriebsunterbrechung und der Modelle der Maschine (30), des Spannmittels (58) und des Werkzeugs (56),
- Übertragen (20) des Werkzeugwegs (64) in Form eines Freifahr-Steuerprogramms (48) an die Steuerung (32) der Maschine (30) und
- Abarbeiten (22) des Freifahr-Steuerprogramms (48).

2. Verfahren nach Anspruch 1,
**dadurch gekennzeichnet, dass** das Modell (16) der Maschine (30) Geometrie-Informationen und Kinematik-Informationen der Maschine (30) umfasst.

3. Verfahren nach Anspruch 1 oder 2,
**dadurch gekennzeichnet, dass** das Modell des Spannmittels (58) Lage- und Orientierungsinformation des Spannmittels (58) umfasst.

4. Verfahren nach einem der vorstehenden Ansprüche,
**dadurch gekennzeichnet, dass** das Modell des Werkstücks (52) Lage- und Orientierungsinformation des Werkstücks (52) umfasst.

5. Verfahren nach einem der vorstehenden Ansprüche,
**dadurch gekennzeichnet, dass** die Bearbeitungssimulation (14) Geometriedaten des unbearbeiteten Werkstücks (40) und Werkzeugwegoperationen (42) zur Berechnung der aktuellen Werkstückgeometrie verwendet.

6. Numerische Steuerung zum automatischen Freifahren eines Werkzeugs (56) in einer Maschine (30) nach einer unvorhergesehenen Betriebsunterbrechung, wobei die Maschine (30) ein Spannmittel (58) für ein zu bearbeitendes Werkstücks (52) und ein Werkzeug (56) zum Bearbeiten des Werkstücks (52) umfasst, mit
- Mitteln zum automatischen Abspeichern der Anweisung, bei deren Ausführung sich die unvorhergesehene Betriebsunterbrechung ereignete,
- Mitteln zum automatisches Abspeichern der räumlichen Lage des Werkzeugs (56) bei der unvorhergesehenen Betriebsunterbrechung,
- Mitteln zum Übermitteln der Anweisung und der räumlichen Lage an eine Bearbeitungssimulation (14), wobei die Bearbeitungssimulation (14) ein Berechnungsmodul (36) umfasst zum Berechnen einer aktuellen Werkstückgeometrie zum Zeitpunkt der Betriebsunterbrechung unter Verwendung
-- der Anweisung, bei deren Ausführung sich die unvorhergesehene Betriebsunterbrechung ereignete,
-- der räumlichen Lage des Werkzeugs (56) bei der unvorhergesehenen Betriebsunterbrechung,
-- eines Modells (16) der Maschine (30),
-- eines Modells des Spannmittels (58),
-- eines Modells des Werkzeugs (56) und
-- eines Modells der Rohform (40) des zu bearbeitenden Werkstücks(52),
- Mitteln zum Berechnen eines kollisionsfreien Werkzeugwegs (46) von der Position (62) des Werkzeugs (56) bei der unvorhergesehenen Betriebsunterbrechung zu einer sicheren Zielposition (24) unter Verwendung der aktuellen Werkstückgeometrie, der räumlichen Lage des Werkzeugs (56) bei der unvorhergesehenen Betriebsunterbrechung und der Modelle der Maschine (30), des Spannmittels (58) und des Werkzeugs (56),
- Mitteln zum Übertragen des Werkzeugwegs in Form eines Freifahr-Steuerprogramms (48) an die Steuerung (32) der Maschine (30) und
- Mitteln zum Abarbeiten des Freifahr-Steuerprogramms (48).

7. Werkzeugmaschine mit einer numerischen Steuerung nach Anspruch 6.

8. Werkzeugmaschine nach Anspruch 7,
**dadurch gekennzeichnet, dass** dass ein CAM-System über Datenleitungen (34, 50) mit der numerischen Steuerung (32) verbunden ist und dass die Mittel zum Berechnen einer aktuellen Werkstückgeometrie (36) zum Zeitpunkt der Betriebsunterbrechung und die Mittel zum Berechnung (46) eines kollisionsfreien Werkzeugwegs (64) von der Position (62) des Werkzeugs (56) bei der unvorhergesehenen Betriebsunterbrechung zu einer sicheren Zielposition (24) von dem CAM-System zur Verfügung gestellt werden.
